# EUROPÄISCHE PATENTSCHRIFT

(11) **EP 1 235 760 B1**
(45) Veröffentlichungstag und Bekanntmachung des Hinweises auf die Patenterteilung: **16.05.2007**
(21) Anmeldenummer: 00993174.2
(22) Anmeldetag: 25.11.2000
(51) Int. Cl.: C04B 35/569, F02P 19/02, F23Q 7/00, H01C 7/06, H05B 3/14

(54) **SILIZIUMCARBID-ELEMENT**
SILICON CARBIDE ELEMENT
ELEMENT AU CARBURE DE SILICIUM

(30) Priorität: 25.11.1999 DE 19956767
(43) Veröffentlichungstag der Anmeldung: 04.09.2002
(73) Patentinhaber: Nanogate AG, 66121 Saarbrücken (DE)
(72) Erfinder: HEUBERGER, Martin, 66133 Saarbrücken (DE); KUNTZ, Michael, 66424 Homburg (DE); NASS, Rüdiger, 66292 Riegelsberg (DE)
(74) Vertreter: von Kreisler Selting Werner
(86) Internationale Anmeldenummer: PCT/DE2000/004205
(87) Internationale Veröffentlichungsnummer: WO 2001/038254

(56) Entgegenhaltungen:
- DE-A- 19 537 714
- JP-A- 11 079 840

## Beschreibung

Die vorliegende Erfindung betrifft eine Keramikwärmeelementanordnung nach dem Oberbegriff des Anspruches 1 sowie ein Verfahren zu dessen Herstellung.

Es ist bekannt, Keramikwärmeelemente zu verwenden, um beispielsweise bei Brennern das zu verbrennende Gemisch anfänglich auf eine Temperatur oberhalb der Zündtemperatur zu erhitzen. Derartige Keramikwärmeelemente aus Siliziumcarbid können auf unterschiedliche Weisen hergestellt werden. Oftmals sind die Siliziumcarbidkörper nicht sehr dicht, sondern großporig, was zu einer geringen mechanischen Belastbarkeit führt.

Aus der US-PS 5,322,824 ist es bekannt, einen drucklos gesinterten Siliziumcarbidkeramikkompositgegenstand mit einer Gleichstromleitfähigkeit von zumindest 0,05 (Ohm x cm)⁻¹, einer Volumendichte von zumindest 2,9 g/cm³ und einer Biegestärke von zumindest 100 MPa vorzusehen, welcher Leitfähigkeitseigenschaften des p-Typus aufweist, wobei diesem Körper ungefähr 0,5 bis 6,0 Gewichtsprozent Aluminium und 0,1 bis 2,0 Gewichtsprozent Bor zugemischt werden, wobei Aluminium zumindest im selben Gewichtsmaß wie Bor vorgesehen ist, und weiter zumindest 0,1 bis ungefähr 6,0 % freier Kohlenstoffe und zumindest 90 Gewichtsprozent Siliziumcarbid umfaßt, wobei das Siliziumcarbid vorwiegend in der Alphaphase vorliegen soll. Es wird ausgeführt, daß der Siliziumcarbidkörper der US-PS 5,322,824 einen relativ niedrigen elektrischen Widerstandswert durch die Dotierung mittels Aluminium- und Boratomen in die Siliziumcarbidkristallgitterstruktur aufweist, und zwar durch einen Diffussionsmechanismus bei erhöhten Temperaturen, um einen SiC(Al, B)-Halbleiter des p-Typus zu bilden. Es wird weiter ausgeführt, daß Aluminium-Dotierungsmittel einen stärker widerstandswertsenkenden Effekt auf Siliziumcarbid aufweisen als Bor-Dotierungsmittel. Es wird auch ausgeführt, daß in SiC-Al-C-Systemen eher ein normales Kornwachstum auftritt als in SiC-B-C-Systemen, und zwar bei einer Sintertemperatur höher als ungefähr 2.050°C und daß dieses Kornwachstum unerwünscht aufgrund der Verschlechterung der mechanischen Eigenschaften ist. Das gemäß der US-Schrift zu verwendende Siliziumcarbidpulver, welches als Ausgangsmaterial verwendet werden soll, soll selbst nur geringe Spuren an Verunreinigungen wie Graphit, Aluminium, Bor oder freies Silizium aufweisen. Es wird in dem US-Patent auch vorgeschlagen, daß das Sintern des Grünkörpers in einer Stickstoffatmosphäre erfolgen kann, soweit die resultierende elektrische Leitfähigkeit nicht von Belang ist.

Ein Sinterkörper aus Siliziumcarbid oder Borcarbid ist weiter aus der DE 42 33 626 bekannt, in der vorgeschlagen wird, daß man einen Sinterkörper aus Siliziumcarbid oder Borcarbid dadurch herstellt, daß man a) Siliziumcarbid oder Borcarbid in einem wässrigen oder organischem Medium suspendiert und durch einstellen eines geeigneten pH-Wertes negative oder positive Oberflächenladungen erzeugt, b) ein Sinteraditiv, das Oberflächenladungen von der auf dem Siliziumcarbid oder Borcarbid entgegengesetzte Polarität aufweist, zumischt, c) aus dem erhaltenden Schlicker einen Grünkörper herstellt und d) den Grünkörper zu einem Sinterkörper sintert. Es wird als Sinteraditiv insbesondere ein Zweikomponentensinteraditiv, vorzugsweise C/Al, C/B, C/Al₂O₃ oder C/B₄C im Falle von SiC verwendet.

Es wird erwähnt, daß man einen Sinterkörper erhält, der Verwendung finden kann als Strukturkeramik im Hochtemperaturbereich, zum Beispiel für Gasturbinen, Brennkammern, Rotorschaufeln und Turbinenräder; im chemischen Apparatebau für den Einsatz mit stark korrosiven Medien; als Wärmeaustauscher, Heizleiter, feuerfeste Werkstoffe im Hochtemperatur-Ofenbau; im Maschinenbau als Gleitlager und Gleitringdichtungen; in der Schleifmittelindustrie; und in der Elektroindustrie zur Herstellung von Varistoren und Gleichrichtern. Die SiC-Fasern, -whisker und -komposite dienen dann zur Verbesserung der Festigkeit und Bruchzähigkeit von oxidischen und nichtoxidischen Hochleistungskeramiken. Das Sintern soll gemäß der DE 42 33 626 A1 insbesondere drucklos erfolgen.

In der DE 195 37 714 wird beschrieben, wie ausgehend von der DE-A-42 33 626 Siliziumcarbid-Werkstoffe mit guten elektrischen Eigenschaften, insbesondere guter elektrischer Leitfähigkeit, guter Oxidationsbeständigkeit und hoher Festigkeit durch druckloses Sintern hergestellt werden können. Es wird beschrieben, daß Aluminium neben anderen ein geeignetes, über Sinteraditive zuzusetzendes Element ist. Weiter wird angegeben, daß Kohlenstoff beim Sintern als Reduktionsmittel wirken kann und die Kornoberflächen des SiC von SiO₂ reinigen kann, womit eine Erhöhung der Oberflächenenergie des Pulvers und der Korngrenzendiffusion beim Sintern verbunden sein soll. Es wird auch angegeben, daß, damit man sich diese vorteilhaften Eigenschaften der Sinteraditive zu Nutze machen kann, diese homogen in der grünen Keramik verteilt sein müssen. Es wird auch erwähnt, daß durch Dotierstoffe, wie Aluminiumnitrid, Molybdändisilizid, Phosphor, Arsen und Antimon zwar eine gute elektrische Leitfähigkeit erreicht werden kann, durch diese Zusätze das Sinterverhalten der Keramik aber ungünstig beeinflußt wird, so daß eine ausreichende Verdichtung nur durch druckunterstützte Sinterverfahren wie Heißpressen oder heißisostatisches Pressen erreicht werden kann.

Die DE 195 37 714 schlägt dann vor, daß bei einem Verfahren zur Herstellung eines leitfähigen Sinterkörpers auf der Basis von Siliziumcarbid insbesondere ein Nachglühschritt in einer stickstoff- und/oder kohlenmonoxidhaltigen Atmosphäre nach dem Sintern erfolgt. Dies soll zu einer guten elektrischen Leitfähigkeit führen, die insbesondere zur Herstellung von Glühzündern erforderlich sein soll. Es wird angegeben, daß der Widerstand eines derartigen Zünders über seine Geometrie eingestellt werden kann, die in der DE 195 37 714 beschriebenen Glühzünder auch bei 220 V betrieben und sehr klein dimensioniert werden können. Es wird insbesondere ein hantelförmiger Glühzünder mit einer Gesamtlänge von 60 mm und einer Breite von 4 mm beziehungsweise 2 mm bei einer Dicke von 1 mm vorgeschlagen. Dieser soll auf eine Temperatur in Luft von 1.300°C aufheizbar sein.

Ein Nachteil der bekannten Anordnung besteht darin, daß die vorbekannten SiC-Keramiken, insbesondere nach der DE 195 37 714 einen negativen Temperaturkoeffizienten besitzen. Bei der Verwendung als Glühzünder in Gas- und/oder Ölbrennern wird nun üblicherweise gefordert, daß eine bestimmte, zur Zündung sicher ausreichende Temperatur in einer vorgegebenen Zeit erreicht und danach für eine bestimmte Dauer gehalten werden muß, die ausreicht, um ein an dem heißen Zünder vorbeiströmendes Brennstoffgemisch, wie beispielsweise ein z.B. mit 10 m/s strömendes Luft-Gasgemisch und/oder Luft-Ölgemisch sicher zu entzünden. Nach dem sichergestellten Entzünden kann der Zünder ausgeschaltet werden. Problematisch ist, daß bei den bekannten SiC-Keramikwärmeelementen mit NTC-Verhalten durch den rapide abnehmenden Widerstand sich zunächst das Zünderelement und dann dessen Halterung auf unerwünscht hohe, insbesondere weit über der Zündtemperatur liegende Temperaturen erwärmt. Dies kann die elektrische Kontaktierung beeinträchtigen und/oder zu Überschlägen führen. Ansätze, das NTC-Verhalten der Keramik durch Einfügen eines ein PTC-Verhalten aufweisenden Leiters in die Keramik einzubinden, führen dazu, daß ein Heißpressen erforderlich wird, was die Formgebung beeinträchtigt.

Ein Ziel der vorliegenden Erfindung besteht darin, eine Keramikwärmeelementanordnung mit einem Keramikwärmeelement aus Siliziumcarbid anzugeben, welches ein elektrisches NTC-Verhalten aufweist, wobei die Keramikwärmeelementeanordnung so ausgebildet sein soll, daß zumindest temporär eine Überhitzung weder des eigentlichen Keramikwärmeelementes noch dessen Verbindungsteils zu erwarten ist.

Die Lösung dieser Aufgabe wird unabhängig beansprucht. Bevorzugte Ausführungsformen finden sich in den Unteransprüchen.

Gemäß einem ersten wesentlichen Aspekt der Erfindung wird somit eine Keramikwärmeelementanordnung vorgeschlagen, worin ein Keramikwärmelement aus SiC mit elektrischem NTC-Verhalten in einem Stromkreis vorgesehen ist. Hierbei soll im Stromkreis wenigstens ein Segment vorhanden sein, dessen spezifischer, temperaturabhängiger Widerstand bei jenem Wert des Stromflusses, der für die gewünschte Wärmeentwicklung beziehungsweise Keramikwärmeelementtemperatur erforderlich ist, zumindest asymptotisch in Sättigung geht.

Damit gibt die vorliegende Erfindung zunächst die technische Lehre einer Dimensionierung eines segmentartigen Teilbereichs derart, daß der Widerstand trotz des NTC-Verhaltens des Kermikwärmelementes aus Siliziumcarbid auch mit weitersteigendem Stromfluß nicht mehr, jedenfalls nicht wesentlich, abfällt. Dies führt automatisch zu einer Begrenzungswirkung.

Für Zündelemente wie für Ölöfen, sowie Glühzünder für Öl- oder Gasbrenner und dergleichen ist es im Regelfall ausreichend, wenn sich der Segmentwiderstand mit weiter ansteigendem Strom nur noch geringfügig ändert; es wurde erkannt, daß insbesondere bei nur kurzzeitig betriebenen Glühzündern, die nach dem Zünden ausgeschaltet werden, auch dann ein zumindest quasi-stabiles Eigenverhalten erreicht werden kann, wenn sich der Widerstand noch geringfügig mit steigendem Strom ändert.

Weiter wurde erkannt, daß die Keramikwärmeelementanordnung auch dann einsetzbar ist, wenn ein Ölzünder verwendet wird, der beispielsweise auf Etagenölheizungen unmittelbar über einem Ölvorrat oder in einer kleinen Ölmenge erhitzt wird, da die erzielbaren Glühtemperaturen ausreichen, um eine Verschmutzung und/oder Zerstörung der Oberfläche durch verkokende Substanzen zu vermeiden.

Aufgrund der guten Korrosionsbeständigkeit der zu für das Keramikwärmeelement verwendenden SiC-Keramik kann dieses insbesondere auch zur Erwärmung korrosiver Medien verwendet werden, etwa zum Kochen von hochkonzentrierten Mineralsäuren wie H₂SO₄. Auch können Feststoffe verdampft und/oder geschmolzen werden, z.B. können Salzschmelzen erzeugt werden. Insbesondere Schwefel ist so zu behandeln.

Das Keramikglühzündelement kann insbesondere für Temperaturen an der wärmsten Stelle im Bereich von oberhalb 500°C, insbesondere 1.100°C ausgebildet sein. Für Öl- und/oder Gasbrennerzünder sind Temperaturen um 1400-1500°C an dieser Stelle bevorzugt. Bevorzugt ist das begrenzende Segment als Teil des Keramikwärmeelementes und insbesondere an dessen wärmster Stelle vorgesehen. Dies kann erreicht werden, indem das Segment einen höheren Widerstand pro Länge aufweist als andere Bereiche des Keramikwärmeelements. Dazu kann entweder das Segment schmaler und/oder dünner als andere Bereiche des Keramikwärmeelements ausgebildet werden und/oder der spezifische Widerstandes des Segments wird erhöht. Es sei erwähnt, daß eine solche Ausbildung eines Keramikwärmeelementes, bei welchem unterschiedliche Bereiche bzw. Segmente unterschiedliche elektrische und/oder thermische Eigenschaften aufweisen, per se vorteilhaft sind, unabhängig von der elektrischen Ansteuerung.

Eine Erhöhung des spezifischen Widerstandes kann erfindungsgemäß insbesondere dadurch erreicht werden, daß das Segment im Vergleich zum restlichen Keramikwärmeelement oberflächennah beziehungsweise an der Oberfläche verändert ist. dies ist gegenüber nur der Veränderung rein geometrischer Abmessungen wesentlich bevorzugt, weil eine Verringerung etwa der Dicke des Keramikwärmeelement unter bestimmte Grenzen die mechanische Beständigkeit gefährden kann.

Insbesondere kann die Leitfähigkeit des oberflächlichen Materials durch eine Stickstoffdotierung erhöht werden. Es wurde erkannt, daß bei Behandlung des gesinterten feinporigen Körpers in einer Stickstoff-CO-Atmosphäre der dotierende Stickstoff, welcher die Leitfähigkeit des Sinterkörpers erhöht, primär oberflächennah verbleibt, sich also ein Stickstoffgradient ausbildet, was noch nicht vollständig verstanden ist, aber auf die hohe Dichte des Keramikgrundkörpers zurückgeführt wird. Bei Stickstoffdotierung durch Einbringen des Keramikwärmeelementes in eine N₂-CO-Atmosphäre bei erhöhter Temperatur kann deshalb der Segmentwiderstand erhöht werden, indem die besser leitende Stickstoffschicht entfernt wird und/oder indem von vorneherein die Dotierung mit Stickstoff so vorgenommen wird, daß am Segment eine verringerte Menge an Stickstoff vorliegt. Dies kann beispielsweise dadurch erreicht werden, daß das Segment mit inerten Substanzen vor der Eindiffussion von Stickstoff in den SiC-Körper versiegelt wird, wozu hinreichend inerte, gasundurchlässige Substanzen verwendet werden können, oder es kann eine Dotierung über Pulver vorgenommen werden, die selektiv Stickstoff freisetzen und deshalb in geringerem Maße, mit größerer Korngröße (d.h. mit geringerer spezifischer Oberfläche) oder gar nicht am Segment angeordnet werden, beziehungsweise welche Stickstoff abfangen und daher in besonders großen Maße nahe des Segmentes angeordnet werden. Derartige Keramikwärmelemente bilden bevorzugte Ausführungsformen des Keramikwärmeelementes, bei welchem unterschiedliche Bereiche bzw. Segmente unterschiedliche elektrische und/oder thermische Eigenschaften aufweisen, per se vorteilhaft sind, unabhängig von der elektrischen Ansteuerung. Eine besonders bevorzugte Variante des Keramikwärmeelementes sieht vor, daß die Spitze des Keramikwärmeelementes, insbesondere Keramikglühzünders eine geringe spezifische Leitfähigkeit besitzt, insbesondere durch -über etwa das Sinterverfahren erzielter - hoher Dichte und geringer Dotiertiefe, was dort zu geringer spezifischer Leitfähigkeit führt, während am Schenkel eine niedrigere Dichte mit größerer Dotiertiefe eingestellt wird, um eine durch höhere spezifische Leitfähigkeit geringere ohmsche Erwärmung zu erzielen. Dies ergibt ein unabhängig von der Ansteuerung gewerblich nutzbares und daher separat beanspruchtes Keramikwärmeelement mit optimalem Temperaturprofil und einer thermisch weniger belasteten Halterung.

Das Segment kann insbesondere einen insgesamt geringeren Querschnitt als andere Bereiche des Keramikwärmelementes aufweisen. Wenn eine Stickstoffschicht im Segmentbereich entfernt werden soll, kann dies durch Wegschleifen, Sandstrahlen, Kugelstrahlen usw. einer stickstoffhaltigen Oberflächenschicht geschehen, was gleichzeitig vorteilhaft auch den Keramikwärmeelementquerschnitt im Segment verringert. Alternativ kann eine Nachsinterung unter Vorhandensein eiens Temperaturgradienten erfolgen.

Das Keramikwärmeelement kann ein drucklos gesinterter Siliziumcarbidkörper sein. Die Ausbildung als drucklos gesinterter Körper erlaubt eine große Freiheit bei der geometrischen Formgebung, die über unterschiedliche Verfahren rereicht werden können. So können Segmente an beliebigen Stellen vorgesehen werden und/oder Mikrostrukturen im vollen Material erzielt bzw. an der Oberfläche erzeugt werden. Insbesondere können Wärmeabstrahlrippen zwischen dem Segment und dem Träger vorgesehen werden.

Während das Segment typisch als Teil des Keramikwärmeelementes ausgebildet wird, kann in einer alternativen Ausführungsform der Erfindung auch vorgesehen sein, daß das Segment durch einen Vorwiderstand mit PTC-Verhalten getrennt vom Keramikwärmeelement gebildet ist. Bei diesem Vorwiderstand kann es sich inbesondere um eine Glühbirne handeln, wie eine Halogenlampe oder dergleichen, da bei den typischen Glühzünderanwendungen wie für das Anschalten von Brennern usw. die Widerstandsänderung bei steigendem Stromfluß in der Glühbirne etwa genauso schnell wie im keramischen Wärmeelement erfolgt. Es besteht damit keine Gefahr, daß der keramische Zünder überhitzt. Auf die Möglichkeit einer Strom- und/oder Leistungsbegrenzugnsschaltung für das Keramikwärmeelement wird hingewiesen.

Die Erfindung wird im folgenden nur beispielsweise anhand der Zeichnungen beschrieb. In dieser zeigt:
- Fig. 1: einen Siliziumcarbid-Grünkörper gemäß der vorliegenden Erfindung;
- Fig. 2: ein fertiggestelltes SiC-Glühzünderelement gemäß der vorliegenden Erfindung;
- Fig. 3 und 4: ein Teil einer Sinterhalterung für den Grünkörper von Fig. 1 in Draufsicht und im Schnitt;
- Fig. 5: ein schematisches Verhalten des spezifischen elektrischen Widerstandes eines Siliziumcarbidsegmentes gemäß der vorliegenden Erfindung;
- Fig. 6: eine Schaltkreisanordnung zum Betreiben eines Glühzünders;
- Fig. 7: das Verhalten verschiedener Proben nach der Erfindung

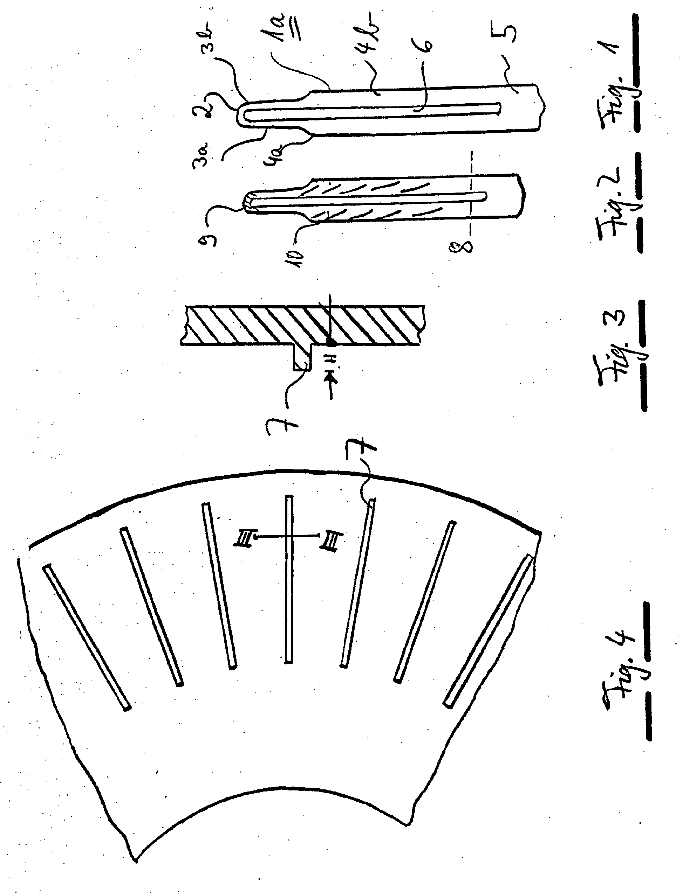

Fig. 1 zeigt einen Grünkörper aus Siliziumcarbid-Keramik, der hergestellt sein kann gemäß dem in der DE 42 33 626 A1 beschriebenen Verfahren. Dabei wird jedoch abweichend von dem dort beschriebenen Verfahren ein Siliziumcarbid-Ausgangsmaterial verwendet, welches einen geringen Anteil an Aluminium-Dotierung aufweist.

Der mit dem aluminiumhaltigen Siliziumcarbid-Ausgangsmaterial hergestellte Schlicker wird zu einem Grünkörper 1a geformt. Dieser Grünkörper 1a weist eine abgerundete Spitze 2 auf, die über zwei dünne Schenkel 3a, 3b mit einem Grundkörper aus breiteren Schenkeln 4a, 4b verbunden ist. Die beiden Schenkel 4a, 4b sind in einem von der Spitze 2 abgewandten Bereich 5 miteinander verbunden. Zwischen den Schenkeln 4a, 4b, 3a, 3b erstreckt sich von der Spitze 2 zum unteren Verbindungsbereich 5 ein breiter Schlitz 6.

Der Grünkörper hat in einem praktischen Ausführungsbeispiel eine Dicke von etwa 1,5 mm und eine Länge von etwa 65 mm.

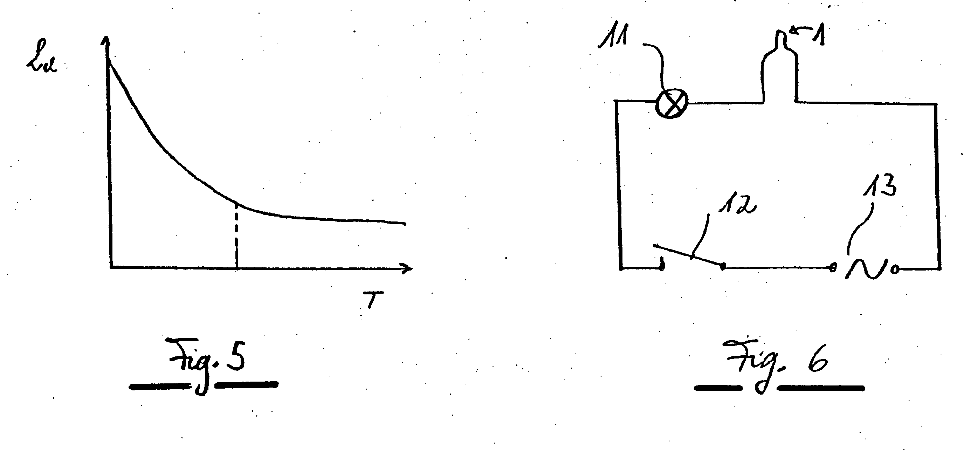

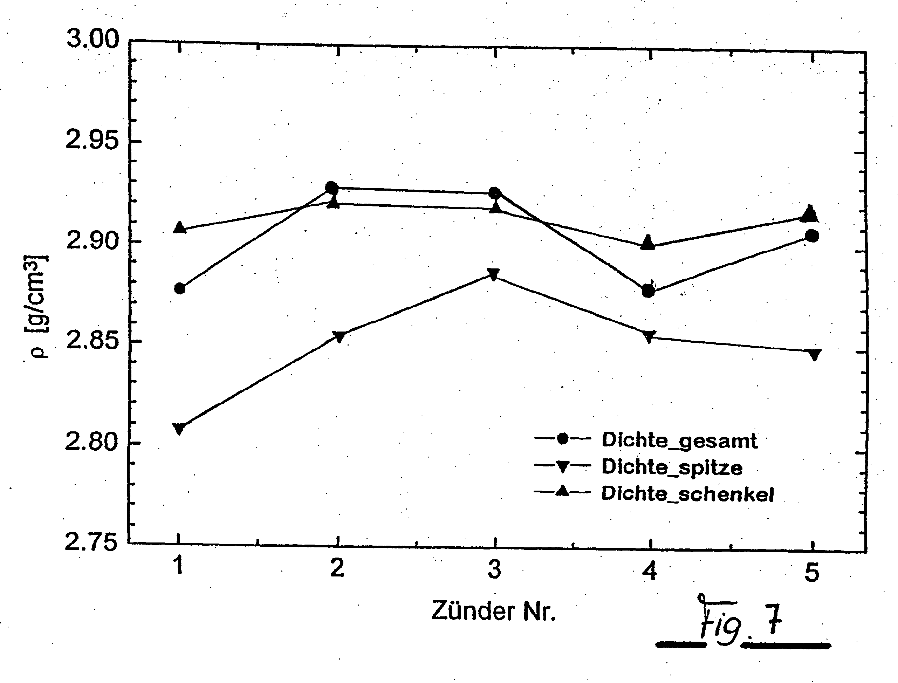

Der Siliziumcarbid-Grünkörper von Fig. 1 wird nun auf einen runden Träger aus Graphit aufgesetzt, der wie in Fig. 4 gezeigt sternförmig verlaufende Stege 7 aufweist, die eine geringere Breite als der Schlitz 6 besitzen. Der Grünkörper wird mit seinem Schlitz 6 so auf die Stege 7 gesetzt, daß die Spitze 2 am radial äußeren Ende des Steges 7 angeordnet ist. Es werden alle Stege 7 bestückt. Der Steg 7 besitzt eine solche Höhe H (Fig. 3), daß der Steg geringfügig über den aufgelegten Grünkörper 1a übersteht, so daß nun mehrere der mit Grünkörpern bestückten Sternplatten gestapelt und in einem geeigneten Sinterofen in per se bekannter Weise gesintert werden können.

Es wird dann in einer Inertgasatmosphäre aus Ar/He gesintert. Durch die homogene Verteilung der Sinteradditive wie aus der DE 42 33 626 bekannt werden an den SiC-Korngrenzen vorhandene Siliziumdioxidschichten reduziert und so ein gleichmäßiges Korngrenzengefüge mit geringen Übergangswiderständen für elektrische und Wärmeströme vorgesehen. Dies führt zu einer besonders hohem Wärmeleitfähigkeit durch saubere Korngrenzen und eine überlegene Temperaturwechselbeständigkeit. Zudem ergeben sich feinverteilte Poren, die im Mittel kleiner als die mittlere Korngröße sind und nicht festigkeitsverringernd sind, was eine hohe Festigkeit zur Folge hat. Obwohl die feinen Porengrößen bewirken, daß bei späterer Erwärmung allenfalls in geringem Ausmaß Gase eindringen können, kann bei einer Stickstoffdotierung ein wesentlicher Teil des Stickstoffes im Außenbereich verbleiben, was noch nicht vollstädnig verstanden wird.

Die Stickstoffdotierung kann auf verschiedene Weisen erfolgen. Eine erste Möglichkeit ist die Erwärmung beziehungsweise das Halten der gesinterten Körper in erwärmtem Zustand in einer Stickstoff-Kohlenmonoxidatmosphäre. Diese Atmosphäre kann beispielsweise um 95 % Stickstoff und um 5 % CO enthalten. Das Kohlenmonoxid ist dann erforderlich, wenn nicht unmittelbar nach dem Sintern die Stickstoffdotierung erfolgt, sondern der bereits gesinterte Grundkörper durch Zwischenschritte, etwa Sichtkontrollen der bereits gesinterten Körper, einer sauerstoffhaltigen Atmosphäre ausgesetzt wird. Die Dotierung kann dabei insbesondere unter von Standardruck abweichenden Druckbedingungen erfolgen, d.h. insbesondere mit erhöhtem Druck, um die Dotierungsgeschwindigkeit zu erhöhen.

Es ist möglich, den Grünkörper ganz oder, zur Erzielung eines Gradienten beziehungsweise einer über die Grünkörperfläche variierenden Stickstoffdotierung, nur teilweise auf ein stickstoffabgebendes Material wie Siliziumnitride, Aluminiumnitrid, N-dotiertes SiC usw. zu legen und/oder darin einzubetten. Auf diese Weise werden die Bereiche, die in intensiven Kontakt mit dem stickstoffabgebenden Material gelangen, höher dotiert.

Weiter ist es möglich, alternativ bestimmte Bereich in Siliziumcarbidpulver einzubetten, welches dann mit dem Siliziumcarbid des gesinterten oder zu sinternden Keramikelementes um den Stickstoff aus der Stickstoffatmosphäre konkurriert. Es ist darauf zu achten, daß erforderlichenfalls das Siliciumcarbidpulver nach jedem Sintervorgang ausgewechselt wird, um ein konstantes Verhalten zu erhalten.

Es sei darauf hingewiesen, daß das Dotieren nicht auf der Sternplatte erfolgen muß, sondern auch separat von dieser erfolgen kann.

Bei der Wahl des zur Dotierung oder zur Stickstoffkonkurrenz verwendeten Pulvers ist einsichtig, daß die Pulverfeinheit eine wesentliche Rolle aufgrund der verschiedenen spezifischen Oberflächen spielt.

Im vorliegenden Beispiel wird der gesinterte Keramikkörper in einer Atmosphäre aus 95 % Stickstoff und 5 % CO für eine ausreichende Zeit stickstoffdotiert, um zu gewährleisten, daß eine oberflächliche und oberflächennahe Stickstoffdotierung erfolgt.

Nach der Dotierung kann die Spitze 2 auf beiden Seiten des flachen Sinterkörpers abgeschliffen werden, wie durch die Schraffierung 9 dargestellt, so daß im Bereich der Schraffierung 9 die Spitze 2 nicht mehr die oberflächennahe Stickstoffdotierung aufweist, die durch die Schraffierung 10 für den verbleibenden Keramikwärmeelementkörper angedeutet ist. Danach kann der untere, nur während des Sinterns zur Erhöhung der Stabilität gewünschte Bereich 5 von dem gesinterten Körper abgetrennt werden, wie durch Linie 8 in Fig. 2 angedeutet. Der Keramikwärmeelementkörper kann nun kontaktiert werden. Dazu kann beispielsweise ein herkömmlicher Leiter mit einer dünnen Aluminiumfolie umwickelt werden und diese dann Verlötet bzw. verschweißt werden. Die Umwicklung des Wickelleiters mit hochduktiler Aluminiumfolie wird ein muschelförmiges Ausbrechen der Keramik an der Kontaktstelle aufgrund der unterschiedlichen Wärmeausdehnung von Metalle und Keramik vermieden. Alternativ kann beispielsweise auch ein Nickelblech mit einer Dicke von beispielsweise 0,05 mm verwendet werden. Dieses kann dann mit herkömmlichem, für diesen Zweck verwendeten Lot wie Ti-haltigem Aktivlot "CB-4" von Degussa mit nahezu 50 % Silber- und 50 % Kupferanteil auf das Keramikelement aufgelötet werden.

Der kontaktierte Keramikkörper kann nun in eine Gußmasse eingebettet werden, die aus dem Stand der Technik per se bekannt ist. Dabei kann zur Vermeidung späterer Überschläge zwischen die beiden Schenkel 4a, 4b in den Schlitz 6 eine keramische Trennwand gesetzt werden, die ein Überschlagen der Vergußmasse bei Erwärmung verhindert.

Das vergossene und somit montagebereite Keramikwärmeelement kann nun über die aus der Vergußmasse herausgeführten elektrischen Wickelanschlußleitungen mit einer Wechselspannungsquelle von etwa 230 V verbunden werden. Dabei erwärmt sich der gesamte Keramikkörper. Aufgrund der Erwärmung nimmt der Widerstand des Keramikkörpers, entsprechend seinem NTC-Verhalten, stark ab. Dies führt zu einem sich weiter erhöhendem Stromfluß. Hierbei wird ein überwiegender Teil des Stromes durch die gut leitende stickstoffdotierte oberflächliche Schicht fließen, die in Fig. 2 durch die Schraffierung 10 angedeutet ist. Im Bereich der Spitze 2 ist diese oberflächliche Schicht aufgrund des Abschleifens nicht mehr vorhanden. Demgemäß ist der Widerstand in diesem Bereich deutlich höher, daß bei einem stärkeren Spannungsabfall in diesem Bereich der Spitze 2 führt und demgemäß zu einem besonders hohem Temperaturanstieg im Bereich der Spitze 2. Ein Altern durch Veränderung des Widerstandsverhältnisses von Segment und restlichen Keramikwärmeelementbereichen wurde auch nach wiederholter Zyklierung nicht beobachtet.

Fig. 5 zeigt, wie der spezifische Widerstand des Siliziumcarbids mit Temperatur abnimmt. Es ist zu erkennen, daß für hohe Temperaturen ein asymptotisches Sättigungsverhalten eintritt. Für die sehr hohe Erwärmung der Spitze liegt dabei bereits ein asymptotisches Verhalten vor. Dies führt dazu, daß sich der Gesamtwiderstand der Anordnung dem Widerstandswert nähert, der durch die geometrische Abmessung der Spitze und dem spezifischen Widerstand im asymptotischen Bereich gegeben ist. Damit kann der Stromfluß durch die Spitze nicht beliebig ansteigen. Ein derartiger Zünder kann Temperaturen von beispielsweise 1.200 °C erreichen und diese für mindestens 30 Sekunden halten, ohne daß eine Temperatur von z.B. 1.400°C überschritten wird. Damit ist durch die Ausbildung eines Segmentes im Keramikwärmeelement, dessen Widerstand an dem für eine gewünschte Wärmeentwicklung erforderlichen Stromfluß zumindest quasi asymptotisch in Sättigung geht, ein zumindest quasi stabiles Verhalten erzielt.

Fig. 6 zeigt eine weitere Anordnung, in der ein Segment in einem Keramikwärmeelement-Stromkreis vorgesehen ist, bei welchem Segment der Widerstand an dem für die gewünschte Wärmeentwicklung benötigten Stromfluß zumindest quasi asymptotisch in Sättigung geht. In Fig. 6 bezeichnet 1 ein Keramikwärmeelement aus Siliziumcarbid, welches nach dem der DE 42 33 626 A1 oder DE 195 37 714 hergestellt ist, ohne daß, wie im Ausführungsbeispiel von Fig. 2 ein Spitzenbereich oberflächlich abgeschliffen wurde. Weiter umfaßt der Schaltkreis von Fig. 6 eine handelsübliche Glübirne 11, zum Beispiel eine 50 W Halogenlampe, einen Schalter 12 und eine 230 V Wechselstromquelle 13.

Wenn der Schalter 12 geschlossen wird, fließt zunächst, aufgrund des noch geringen Widerstandes die Glühbirne 11 ein großer Strom durch den Schaltkreis und erwärmt das Keramikwärmeelement 1 mit NTC-Charakteristik, worauf der Widerstand abfällt und sich das Keramikwärmeelement stark erwärmt. Gleichzeitig und mit ungefähr vergleichbarem Temperaturanstieg ändert sich auch die Temperatur der in der Glühlampe vorhandene Glühwendel, worauf deren Widerstand ansteigt, was den Strom begrenzt. Die Glühlampe 11 wirkt somit als PTC-Element und das NTC-Verhalten des Keramikwärmeelementes aus Siliziumcarbid wird zumindest partiell kompensiert. Die Glühlampe 11 stellt somit das erfindungsgemäße Segment dar. Mit der gezeigten Anordnung kann eine hohe Temperatur von beispielsweise 1.580°C dauerhaft ohne Beschädigung des SiC-Elementes oder dessen Anschlüsse gehalten werden.

Fig. 7 zeigt, wie sich bei unterschiedlichen Proben, bei denen die äußere Zünderspitze mit Temperaturgradienten nachgesintert wurde und nachfolgend eine Dotierung im Temperaturgradienten erfolgte, die Dichte von Spitze und Schenkel sowie die Gesamtdichte verhalten. Es ist klar zu erkennen, daß die Dichte am Schenkel höher als jene an der Spitze ist. Dies hat Unterschiede im Erwärmungsverhalten zur Folge.

Es wird somit ein Keramikwärmeelement gezeigt, das auch über einen Zeitraum von wenigstens 15, bevorzugt typisch 30 und insbesondere bevorzugt 45 Sekunden quasi stabil und ohne Eigenzerstörung betrieben werden kann.

Es sei erwähnt, daß insbesondere die mit den beschriebenen Anordnungen für Gasbrenner übliche Vorglühzeit von 30 Sekunden gehalten werden kann und daß es möglich ist, den Zünderwiderstand bei der Fertigung der Wärmeelementkeramik um bis zu einem Faktor 5 zu verändern, ohne daß Veränderungen der Glühtemperatur signifikant werden. Zudem kann durch eine geeignete Wahl der Glühkörper-Glühbirne-Kombination die Zünder-Reglereinheit auf regional unterschiedlichen Netzspannungen oder unterschiedliche Glühtemeperaturen, zum Beispiel aufgrund von unterschiedlichen Gasströmgeschwindigkeiten eingestellt werden, wobei niedrigere Glühbirnenwattzahl für höheren Netzspannungen erforderlich sind. Auch kann das Keramikwärmeelement in eine Flüssigkeit zu dessen Erwärmung eingetaucht werden, insbesondere in aggressiven und/oder komprimnierten bzw. überkritischen Fluiden.

Im übrigen sei erwähnt, daß die einfache Formgebung des Keramikelementes durch bloßes Sinters es insbesondere erlaubt, die Schenkel 4a, 4b mit wärmeabstrahlenden Rippen auszubilden, so daß der Kontaktbereich, über welche die Schenkel mit den elektrischen Zuleitungen verbunden sind, die erhöhte Wärmeabstrahlung kälter bleiben.

Es sei auch erwähnt, daß auch andere Versorgungsspannungen als 230 V Wechselstrom bei entsprechender Auslegung einsetzbar sind.

## Patentansprüche

1. Keramikwärmeelementanordnung, worin ein Keramikwärmeelement aus SiC mit elektrischem NTC-Verhalten für einen Stromkreis vorgesehen ist, **dadurch gekennzeichnet, daß** im Stromkreis wenigstens ein Segment vorhanden ist, dessen Widerstand an dem für eine gewünschte Wärmeentwicklung benötigten Stromfluß zumindest quasi asymptotisch in Sättigung geht.

2. Keramikwärmeelementänordnung nach dem vorhergehenden Anspruch, worin sich der Widerstand des Segmentes um nicht mehr als 10 % verändert, wenn der Strom um 20 % steigt, bevorzugt um weniger als 5 % bei 10 % Stromänderung verändert.

3. Keramikwärmeelementanordnung nach einem der vorhergehenden Ansprüche, worin das Keramikwärmeelement ein Zündelement ist, insbesondere ein Glühzünder, wie ein Ölzünder für Ölheizungen, ein Gaszünder für Gasbrenner und/oder Feststoffbrenner und/oder Motoren, insbesondere Dieselmotoren.

4. Keramikglühzündelement nach dem vorhergehenden Anspruch, worin die vom Keramikglühzündelement an der wärmsten Stelle angenommene Temperatur oberhalb von 900°C, insbesondere bei wenigstens 1.100°C liegt.

5. Keramikwärmeelementanordnung nach einem der vorhergehenden Ansprüche, **dadurch gekennzeichnet, daß** das Segment auf dem Keramikelement als Teil desselben vorgesehen ist.

6. Keramikwärmeelementanordnung nach einem der vorhergehenden Ansprüche, **dadurch gekennzeichnet, daß** das Keramikwärmeelement so ausgestaltet ist, daß bei Stromfluß die Temperatur im Segment höher ansteigt als im verbleibenden Keramikwärmeelement.

7. Keramikwärmeelementanordnung nach dem vorhergehenden Anspruch, **dadurch gekennzeichnet, daß** das Segment einen höheren spezifischen Widerstand aufweist als andere Bereiche des Keramikwärmeelementes.

8. Keramikwärmeelementanordnung nach dem vorhergehenden Anspruch, **dadurch gekennzeichnet, daß** der spezifische Widerstand des Segmentes **dadurch** erhöht ist, daß das Segment im Vergleich zum restlichen Keramikwärmeelement oberflächlich und/oder oberflächennah verändert ist.

9. Keramikwärmeelementanordnung nach einem der vorhergehenden Ansprüche, **dadurch gekennzeichnet, daß** eine die Leitfähigkeit des SiC-Grundmaterials durch eine Stickstoffdotierung erhöht ist.

10. Keramikwärmeelementanordnung nach einem der vorhergehenden Ansprüche, **dadurch gekennzeichnet, daß** zumindest auf weiten Teilen des Keramikwärmeelementes der Stickstoffgehalt oberflächennah höher ist als im Keramikwärmeelementinneren.

11. Keramikwärmeelementanordnung nach dem vorhergehenden Anspruch, **dadurch gekennzeichnet, daß** im Segment die stickstoffhaltige, besser leitende Stickstoffschicht entfernt ist und/oder ein Bereich mit geringeren oberflächlichem Stickstoffgehalt vorgesehen ist.

12. Keramikwärmeelementanordnung nach dem vorhergehenden Anspruch, **dadurch gekennzeichnet, daß** das Segment einen insgesamt geringeren Querschnitt aufweist als andere Teile des Keramikwärmeelementes.

13. Keramikwärmeelementanordnung nach einem der vorhergehenden Ansprüche, worin das Keramikwärmeelement ein nahezu homogenes SiC-Gefüge aufweist.

14. Keramikwärmeelementanordnung nach einem der vorhergehenden Ansprüche, **dadurch gekennzeichnet, daß** das Keramikwärmeelement aus feinporigem Siliziumcarbid besteht.

15. Keramikwärmeelementanordnung nach einem der vorhergehenden Ansprüche, **dadurch gekennzeichnet, daß** das Segment durch einen Vorwiderstand mit PTC-Verhalten gebildet ist.

16. Keramikwärmeelementanordnung nach einem der vorhergehenden Ansprüche, **dadurch gekennzeichnet, daß** der Vorwiderstand durch eine Glühbirne realisiert ist.

17. Verfahren zur Herstellung eines SiC- Keramikwärmeelementes, wobei ein SiC-Grünkörper gefiltert und einer dotierenden Stickstoffatmosphäre ausgesetzt wird, **dadurch gekennzeichnet, daß** der dotierende Stickstoff selektiv auf bestimmte Bereiche aufgebracht und/oder von bestimmten Bereichen ferngehalten und/oder davon entfernt wird.

## Claims

1. Ceramic heating element arrangement, in which a ceramic heating element made of SiC having electrical NTC properties is provided for a circuit, **characterised in that** at least one segment is present in the circuit, the resistance of which goes at least quasi-asymptotically into saturation at the current flow required for the desired heat development.

2. Ceramic heating element arrangement according to the preceding claim, in which the resistance of the segment varies by no more than 10 % when the current increases by 20 %, preferably by less than 5 % when the current varies by 10 %.

3. Ceramic heating element arrangement according to one of the preceding claims, in which the ceramic heating element is an ignition element, in particular an incandescent igniter, such as an oil igniter for oil heaters, or a gas igniter for gas burners and/or solid-fuel burners and/or engines, in particular diesel engines.

4. Ceramic incandescent ignition element according to the preceding claim, in which the temperature assumed by the ceramic incandescent ignition element at the hottest point is in excess of 900°C, in particular at least 1100°C.

5. Ceramic heating element arrangement according to one of the preceding claims, **characterised in that** the segment is provided on the ceramic element as part thereof.

6. Ceramic heating element arrangement according to one of the preceding claims, **characterised in that** the ceramic heating element is designed in such a manner that the temperature in the segment rises higher than in the remainder of the ceramic heating element during current flow.

7. Ceramic heating element arrangement according to the preceding claim, **characterised in that** the segment has a higher specific resistance than other regions of the ceramic heating element.

8. Ceramic heating element arrangement according to the preceding claim, **characterised in that** the specific resistance of the segment is increased by varying the segment on its surface and/or close to its surface compared to the remainder of the ceramic heating element.

9. Ceramic heating element arrangement according to one of the preceding claims, **characterised in that** the conductivity of the SiC base material is increased by nitrogen doping.

10. Ceramic heating element arrangement according to one of the preceding claims, **characterised in that** the nitrogen content is higher close to the surface than in the interior of the ceramic heating element, at least over large parts of the ceramic heating element.

11. Ceramic heating element arrangement according to the preceding claim, **characterised in that** the nitrogen-containing, more conductive nitrogen layer is removed and/or a region with a lower surface nitrogen content is provided in the segment.

12. Ceramic heating element arrangement according to the preceding claim, **characterised in that** the segment has an overall smaller cross section than other parts of the ceramic heating element.

13. Ceramic heating element arrangement according to one of the preceding claims, in which the ceramic heating element has an almost homogeneous SiC structure.

14. Ceramic heating element arrangement according to one of the preceding claims, **characterised in that** the ceramic heating element consists of finely porous silicon carbide.

15. Ceramic heating element arrangement according to one of the preceding claims, **characterised in that** the segment is formed by a series resistor having PTC properties.

16. Ceramic heating element arrangement according to one of the preceding claims, **characterised in that** the series resistor is formed by an incandescent bulb.

17. Process for the production of an SiC ceramic heating element, in which an SiC green body is filtered and exposed to a doping nitrogen atmosphere, **characterised in that** the doping nitrogen is applied selectively to specific regions and/or kept away from specific regions and/or removed therefrom.

## Revendications

1. Structure à élément thermique céramique dans laquelle est prévu pour un circuit électrique un élément thermique céramique en SiC avec comportement CTN électrique, **caractérisée en ce qu'**il existe dans le circuit électrique au moins un segment dont la résistance à la conduction de courant nécessaire à un dégagement de chaleur souhaité se sature de façon au moins quasi asymptotique.

2. Structure à élément thermique céramique selon la revendication précédente, dans laquelle la résistance du segment ne se modifie pas de plus de 10 % lorsque le courant augmente de 20 %, de préférence de moins de 5 % quand le courant se modifie de 10 %.

3. Structure à élément thermique céramique selon l'une des revendications précédentes, dans laquelle l'élément thermique céramique est un élément d'allumage, en particulier un allumeur à incandescence, comme un allumeur à huile pour chauffage au fuel, un allumeur à gaz pour brûleur à gaz et/ou brûleur à solides et/ou moteurs, en particulier des moteurs diesel.

4. Élément céramique d'allumeur à incandescence selon la revendication précédente, dans lequel la température de l'élément céramique d'allumeur à incandescence relevée au niveau de l'emplacement le plus chaud est supérieure à 900 °C, et est en particulier au moins égale à 1 100 °C.

5. Structure à élément thermique céramique selon l'une des revendications précédentes, **caractérisée en ce que** le segment sur l'élément céramique est prévu en tant que partie de celui-ci.

6. Structure à élément thermique céramique selon l'une des revendications précédentes, **caractérisée en ce que** l'élément thermique céramique est conçu de façon telle qu'avec la conduction de courant, la température dans le segment augmente plus que dans le reste de l'élément thermique céramique.

7. Structure à élément thermique céramique selon l'une des revendications précédentes, **caractérisée en ce que** le segment présente une résistance spécifique supérieure à celle des autres zones de l'élément thermique céramique.

8. Structure à élément thermique céramique selon la revendication précédente, **caractérisée en ce que** la résistance spécifique du segment est augmentée **en ce que** le segment, par rapport au reste de l'élément thermique céramique, est modifié au niveau de sa surface ou près de sa surface.

9. Structure à élément thermique céramique selon l'une des revendications précédentes, **caractérisée en ce que** la conductibilité du matériau de base SiC est augmentée par un dopage à l'azote.

10. Structure à élément thermique céramique selon l'une des revendications précédentes, **caractérisée en ce qu'**au moins sur de grandes parties de l'élément thermique céramique, la teneur en azote est plus importante près de la surface que dans l'intérieur de l'élément thermique céramique.

11. Structure à élément thermique céramique selon la revendication précédente, **caractérisée en ce que** dans le segment, la couche d'azote meilleure conductrice, contenant de l'azote, est éliminée et/ou une zone présentant une teneur en azote superficielle plus faible est prévue.

12. Structure à élément thermique céramique selon la revendication précédente, **caractérisée en ce que** le segment présente une section dans l'ensemble plus faible que d'autres parties de l'élément thermique céramique.

13. Structure à élément thermique céramique selon l'une des revendications précédentes, dans laquelle l'élément thermique céramique présente une structure SiC presque homogène.

14. Structure à élément thermique céramique selon l'une des revendications précédentes, **caractérisée en ce que** l'élément thermique céramique se compose de carbure de silicium à pores fins.

15. Structure à élément thermique céramique selon l'une des revendications précédentes, **caractérisée en ce que** le segment est formé par une résistance série avec comportement CTP.

16. Structure à élément thermique céramique selon l'une des revendications précédentes, **caractérisée en ce que** la résistance série est réalisée par une lampe à incandescence.

17. Procédé de fabrication d'un élément thermique céramique en SiC, dans lequel un corps vert de SiC est filtré et soumis à une atmosphère d'azote dopante, **caractérisé en ce que** l'azote dopant est appliqué de façon sélective sur des zones déterminées et/ou est tenu éloigné de zones déterminées et/ou est enlevé de ces zones.
